# EUROPÄISCHE PATENTSCHRIFT

(11) **EP 0 910 834 B1**
(45) Veröffentlichungstag und Bekanntmachung des Hinweises auf die Patenterteilung: **09.04.2003**
(21) Anmeldenummer: 98924270.6
(22) Anmeldetag: 02.05.1998
(51) Int. Cl.: G06K 19/077

(54) **Verfahren zur Herstellung von Chipkarten**
Process for producing Chipcards
Procédé de production de cartes à puce

(30) Priorität: 07.05.1997 DE 19719271
(43) Veröffentlichungstag der Anmeldung: 28.04.1999
(73) Patentinhaber: MELZER MASCHINENBAU GmbH, D-58332 Schwelm (DE)
(72) Erfinder: MELZER, Rainer, D-58332 Schwelm (DE); MELZER, Roland, D-58332 Schwelm (DE)
(74) Vertreter: Sparing, Rolf Klaus
(86) Internationale Anmeldenummer: EP9802604
(87) Internationale Veröffentlichungsnummer: WO98050883

(56) Entgegenhaltungen:
- WO-A-96/10803
- DE-A- 19 509 233

## Beschreibung

Die Erfindung betrifft ein Verfahren zum Herstellen von Kunststoffkarten nach dem Oberbegriff des Patentanspruchs 1.

Ein derartiges Verfahren ist aus der DE 195 09 233 A1 bekannt. Danach wird zunächst eine erste Bahn mit Elektronik-Komponenten in Form eines Chips mit einer anbindbaren, vorgefertigten Flachspule mit einer Mehrzahl von Windungen bestückt. Dabei ist es sinnvoll, die Elektronik-Komponenten, mit denen diese erste Bahn bestückt wird, vorab aufzubringen zur Bildung einer sogenannten Trägerbahn. Das Anheften erfolgt vorzugsweise mittels eines Klebers. Die so vorgefertigte Trägerbahn wird dann einem Verfahren zur Herstellung von Chipkarten zugeführt, bei dem diese Trägerbahn in einen Schichtaufbau aus mehreren Bahnen eingebaut wird. Dazu wird auf die Trägerbahn eine zweite Bahn aufgebracht, die Durchbrüche zur Aufnahme der Elektronik-Komponenten aufweist. In einem weiteren Verfahrensschritt wird dann Füllmaterial in die Durchbrüche eingebracht und eingeebnet. Eine mindestens einseitig vorgesehene Deckbahn führt zu dem abschließend zu laminierenden Schichtaufbau. Der Aufwand für die Vorfertigung der Bahnen ist groß. Weiterhin ermöglicht diese Vorfertigung keine unterschiedliche Anordnung der Elektronik-Komponenten in einer Chipkarte.

Aus der WO 96/10803 ist eine Trägeranordnung zum Einbau in eine kontaktlose Chipkarte bekannt, bei der eine Endlos-Trägerfolie mit einer Klebeschicht versehen ist, auf die eine Vielzahl von Transpondereinheiten mit einem Chip und einer Spule aufgebracht werden. Diese Anordnung wird mittels einer Deckfolie hermetisch verpackt, wobei im Bereich der Halbleiterchips in vorteilhafter Weise Aussparungen in der Deckfolie vorgesehen sind. Die aus zwischen zwei Folien verpackten Transpondereinheiten bestehende Trägeranordnung wird zum Weitertransport vorteilhafterweise auf eine Rolle aufgewickelt. Nachteilig ist wiederum das Erfordernis des Einbaus einer vorbestückten Trägerbahn.

Um in einem Kartenkorpus Platz für die Aufnahme der Spule und des Chips zu schaffen, kann bei warmplastischem Material, wie Polyvinylchlorid, eine Ausnehmung auch nicht warm eingepreßt werden, da sich die Oberfläche wellen und ein gegebenenfalls vorhandenes Druckbild auflaminierter Bahnen sich verzerren würde.

Aufgabe der Erfindung ist es daher, ein Verfahren zum Herstellen von Kunststoffkarten nach dem Oberbegriff des Patentaripruchs 1 zu schaffen, das mit hohem Durchsatz, geringem maschinellem Aufwand und geringer Ausschußquote arbeitet.

Die erfindungsgemäße Lösung dieser Aufgabe ist durch den Patentanspruch 1 definiert. Die übrigen Ansprüche beziehen sich auf vorteilhafte Weiterbildungen des erfindungsgemäßen Konzepts.

Hierdurch wird ein Verfahren geschaffen, das den Einbau vorbestückter Trägerbahnen vermeidet. Die Bestückung wird vielmehr in den Herstellungsprozeß der Chipkarten integriert. Einpassungs- und Ausrichtungsprobleme durch vorgefertigte Trägerbahnen entfallen. Auch können fehlerhafte Elektronik-Komponenten ausgesondert werden, ohne daß Bahnabschnitte mit beseitigt werden müssen.

Als Fixierungspunkte können Kleberpunkte oder Schweißpunkte verwendet werden. Da die Anzahl der Fixierungspunkte nach dem erfindungsgemäßen Verfahren klein gewählt werden kann, stören die Kleber- oder Schweißpunkte den späteren Laminierungsvorgang nicht.

Werden als Fixierungspunkte Kleberpunkte verwendet, kann durch Auswahl des Klebers eine wiederholte Ausübung der Kleberwirkung an einem Kleberpunkt eingestellt werden. Hierdurch können erste Kleberpunkte eine Doppelfuriktion übernehmen, nämlich für eine zeitlich begrenzte Fixierung eines ausgestanzten Bahnteilstücks dienen und nach einer Entnahme dieses Bahnteilstücks zum Anheften eines in das ausgenommene Bahnteilstück eingesetzten Flachspule verwendet werden. Bevorzugt sind sogenannte autoadhäsive Kleber.

Weitere Merkmale und Vorteile der Erfindung ergeben sich aus der nachfolgenden Beschreibung eines Ausführungsbeispiels, bei der auf die beigefügten Zeichnungen Bezug genommen wird.
Fig. 1 zeigt in Teildraufsicht eine erste Bahn vor einem Kleberauftrag gemäß einem ersten Ausführungsbeispiel,
Fig. 2 zeigt die erste Bahn gemäß Fig. 1 nach dem Kleberauftrag,
Fig. 3 zeigt die erste Bahn gemäß Fig. 1 mit einer aufgehefteten zweiten Bahn,
Fig. 4 zeigt die Bahnen gemäß Fig. 3 nach einem Stanzvorgang,
Fig. 5 zeigt eine Seitenansicht der Bahnen gemäß Fig. 3 in einer nachfolgenden Arbeitsstation zum Austragen einer gestanzten Fläche aus der zweiten Bahn,
Fig. 6 zeigt in Draufsicht die erste und zweite Bahn mit eingelegter Spule und eingelegtem Chip gemäß dem ersten Ausführungsbeispiel,
Fig. 7 zeigt in Draufsicht ein Halbzeug aus erster und zweiter Bahn gemäß Fig. 7 mit einer dritten Bahn,
Fig. 8 ist ein Teilschnitt durch eine fertiggestellte Karte gemäß dem ersten Ausführungsbeispiel,
Fig. 9 zeigt in Teildraufsicht eine erste Bahn vor einem Auflegen einer zweiten Bahn gemäß einem zweiten Ausführungsbeispiel,
Fig. 10 zeigt die erste Bahn gemäß Fig. 9 mit einer durch Schweißpunkte aufgehefteten zweiten Bahn,
Fig. 11 zeigt die Bahnen gemäß Fig. 10 nach einem Stanzvorgang.

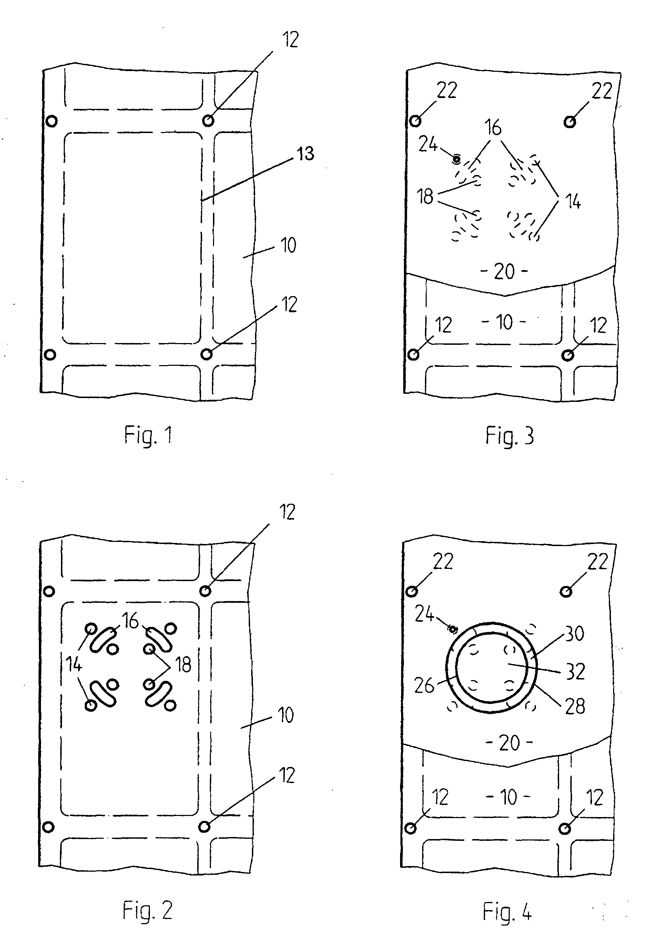

Die Fig. 1 bis 8 verdeutlichen Verfahrensabschnitte eines Verfahrens zur Herstellung von Kunststoffkarten mit einem Chip und einer mit dem Chip verbundenen Flachspule gemäß einem ersten Ausführungsbeispiel. Bei der Flachspule handelt es sich dabei vorzugsweise um eine solche mit einer Mehrzahl Metalldrahtwicklungen.

In Fig. 1 ist ein Teil einer ersten Bahn 10 dargestellt. Im Ausführungsbeispiel werden die Bahnen "endlos" von Bobinen abgewickelt; es ist aber anzumerken, daß das erfindungsgemäße Verfahren auch mit Einzelblatt-Bahnen ausführbar ist. Die erste Bahn 10 ist mit äquidistanten Markierungen 12 versehen, die eine Registerhaltigkeit dieser ersten Bahn 10 mit weiteren Bahnen bei der Herstellung von Kunststoffkarten mit einem Schichtaufbau erlaubt. Bei den Markierungen 12 handelt es sich vorzugsweise um Löcher, die in einer Präzisionsstanzstation eingebracht werden. Die erste Bahn hat eine Dicke von zum Beispiel 0,1 mm. Ein Umriß 13 einer herzustellenden Karte ist strichpunktiert angedeutet.

Die erste Bahn 10 erhält zunächst die Markierungen 12 und durchläuft dann eine Station, in der Kleber aufgetragen wird. Vorzugsweise erfolgt dies im Siebdruckverfahren. Der Kleber ist ein autoadhäsiver Kleber, ein sogenannter selbsthaftender Kleber, wie er etwa bei Preisetiketten und dergleichen verwendet wird. Ein solcher Kleber klebt dauerhaft, d.h. nach einem Lösen der Kleberverbindung durch Abziehen kann dieser Kleber erneut eine Kleberwirkung ausüben.

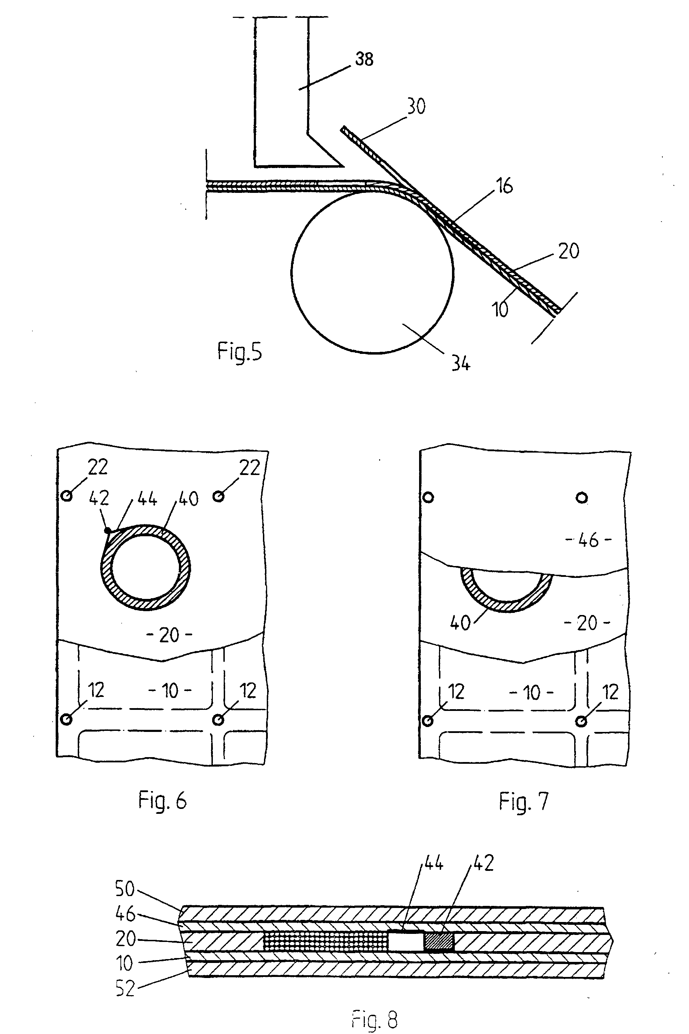

Auf einem Bahnabschnitt der ersten Bahn 10 im Bereich des Umrisses 13 einer herzustellenden Karte, der wählbar ist, werden äußere Kleberpunkte 14, mittlere Kleberpunkte 16 und innere Kleberpunkte 18 aufgetragene. Die mittleren Kleberpunkte 16 besitzen eine Verteilung, die einer Form einer einzusetzenden Flachspule 40 (vgl. Fig. 6) folgen. Da die Flachspule gemäß dem hier beschriebenen Ausführungsbeispiel als Ring ausgebildet ist, liegen die mittleren Kleberpunkte 16 auf einem Kreisumfang. Vorzugsweise sind vier mittlere Kleberpunkte 16 vorgesehen. Die Größe und Form der Kleberpunkte ist wählbar, beispielsweise punktförmig oder bogenförmig. Die Kleberpunkte 16 sind jedoch diskrete Einzelpunkte, die zueinander beabstandet angeordnet sind. Es wäre nicht nur unwirtschaftlich, die gesamte Fläche innerhalb der äußeren Punkte 14 oder auch nur größere Teile dieser Fläche mit Kleber zu beschichten, sondern man würde dadurch einen größeren Bereich schaffen, in dem die Bahnen nicht zusammenlaminiert werden, weil der Kleber als Trennschicht wirkt.

Beidseitig benachbart der mittleren Kleberpunkte 16 werden zusätzliche Kleberpunkte aufgetragen, die von äußeren Kleberpunkten 14 und inneren Kleberpunkten 18, gesehen in Richtung des Umrisses 13 einer Karte, gebildet werden. Die vorstehenden Ausführungen zur Größe und Form der mittleren Kleberpunkte 16 gelten entsprechend für die äußeren und inneren Kleberpunkte 14, 18. Da die mittleren Kleberpunkte 16, wie nachstehend ausgeführt wird, für ein Anheften der Flachspule 40 verwendet werden, während die äußeren und inneren Kleberpunkte 14, 18 nur ein Zwischenanhaften oder eine zeitweise Fixierung von zwei Bahnen bewirken sollen, bevor diese durch Laminieren aneinander befestigt werden, sind diese Kleberpunkte 14, 18 von vorzugsweise kleiner Größe.

In einem nächsten Arbeitsgang wird eine zweite Bahn 20, die vorab mit Markierungen 22 versehen wurde, registerhaltig auf die erste Bahn 10 geführt (vgl. Fig. 3). Die zweite Bahn hat eine Dicke vorzugsweise gleich einer Dicke der einzufügenden Flachspule 40, beispielsweise 0,2 mm. Gleichzeitig mit den äquidistanten Markierungen 22 der zweiten Bahn oder alternativ in einem getrennten Arbeitsgang kann eine öffnung 24 zur Aufnahme eines Chips 42 (vgl. Fig. 6) eingebracht werden.

In einem nächsten Arbeitsgang, dessen Ergebnis in Fig. 4 wiedergegeben ist, werden mittels eines Stanzwerkzeugs, vorzugsweise mittels eines Bandstahlschnitts, zwei konzentrische Schnitte 26, 28 nur in die zweite Bahn eingebracht. Diese Stanzung dient der Ausbildung eines Durchbruchs in der zweiten Bahn 20 zur späteren Aufnahme der Flachspule 40 und Befestigung an der ersten Bahn 10 unter Verwendung der mittleren Kleberpunkte 16. Die Stanzung hat also angepaßt an die Form und Größe der Flachspule 40 zu erfolgen. Dazu werden hier die konzentrischen Schnitte 26, 28 hinsichtlich Umfangsgröße und Beabstandung an die einzusetzende Flachspule 40 angepaßt. Ferner ist die Stanzung auf einem Bahnabschnitt der zweiten Bahn 10 im Bereich des Umrisses 13 einer herzustellenden Karte vorzunehmen, der für die Anordnung der Kleberpunkte 14, 16, 18 gewählt wurde, d.h. die Stanzung für den Durchbruch der Flachspule und damit die Schnitte 26, 28 die mittleren Kleberpunkte 16 umschließen. Die Stanzung für den Durchbruch liegt demnach zwischen den äußeren und den inneren Kleberpunkten 14, 18.

Während dieses Arbeitsvorganges zum Eintragen eines Durchbruchs in der zweiten Bahn 20 für die Flachspule 40 wird die zweite Bahn 20 an der ersten Bahn 10 fixiert durch die Kleberpunkte 14, 16, 18. Die Kleberpunkte 14, 16, 18 bilden demnach Fixierungspunkte, die die aufgelegte zweite Bahn 20 auf der ersten Bahn 10 halten bei einem Arbeitsgang, bei dem ein Durchbruch für die Flachspule 40 in die zweite Bahn 20 eingetragen wird, d.h. die zweite Bahn liegt beim Eintragen des Durchbruchs auf der ersten Bahn 10. Dazu bilden die Kleberpunkte 14, 18 Fixierungspunkte, die derart verteilt werden, daß sie beidseitig benachbart eines einer Form der Flachspule entsprechenden Bahnteilstücks angeordnet werden.

Die Stanztiefe kann man genau einhalten, wobei es unschädlich ist, wenn auch die erste Bahn 10 hierbei angeschnitten wird. Sie darf nur nicht vollständig durchtrennt werden. Nach dem Stanzen ist ein auf diese Weise ausgeschnittener Ring 30, als Bahnteilstück der zweiten Bahn 20, über die mittleren Kleberpunkte 16 noch an der ersten Bahn 10 gehalten. Ein Teilstück 32 der zweiten Bahn 20, das von der Stanzung vollständig umgeben ist und damit von der zweiten Bahn 20 abgetrennt ist, wird von den inneren Kleberpunkten 18 gehalten. Im übrigen werden die erste und zweite Bahn 10, 20 nahe dem äußeren Schnitt 28 durch die äußeren Kleberpunkte 14 aneinandergeheftet.

Der von den Schnitten 26, 28 begrenzte Ring 30 wird nun aus der zweiten Bahn 20 entnommen. Hierfür kann man die aneinandergehefteten Bahnen 10 und 20 über eine Querstange 34 führen, wie in Fig. 5 gezeigt, wodurch die Bahnen 1, 2 eine Krümmung erfahren. Dadurch kann sich ein ausgestanzter Bereich anheben. Sind die mittleren Kleberpunkte 16 derart verteilt worden, daß diese nur punktuell verteilt sind, springt der in Förderrichtung vordere 90°-Sektor 36 des Ringes 30, da er nicht vollflächig von Kleber gehalten ist, aus der zweiten Bahn 20 und kann von einem Haken 38 erfaßt werden, von dem er dann durch nicht gezeigte Mittel abgenommen wird. Das Abheben des Ringes 30 ist besonders gut, wenn die Kleberpunkte 16 nicht kopf- und bodenseitig einer Längsachse einer Karte gemäß dem Umriß 13 angeordnet sind.

In eine so entstandene kreisringförmige Ausnehmung paßt die Spule 40, die manuell oder maschinell eingelegt wird. Ebenso kann der Chip 42 in die für ihn bestimmte öffnung 24 eingelegt und von einem darunter vorsehbaren Kleberpunkt gehalten werden. Verbindungsdrähte 44 zwischen Spule 40 und Chip 42 legen sich dabei einfach auf die Oberseite der zweiten Bahn 20. Die Spule 40 wird durch die mittleren Kleberpunkte fixiert, die beim Entnehmen des Rings 30 eine Kleberwirkung behalten haben. Das Ergebnis dieses Arbeitsgangs ist in Fig. 6 dargestellt, wobei die Spule 40 durch eine Schraffur angedeutet ist.

Als nächstes kann eine dritte Bahn 46 registerhaltig auf die zweite Bahn geführt werden. Die dritte Bahn 46 kann ebenfalls mit Kleber (nicht dargestellt) versehen sein, und zwar in Ausfluchtung mit den Kleberpunkten der ersten Bahn 10. Da die Kleberpunkte symmetrisch zu einer in Förderrichtung verlaufenden Mittelebene angeordnet sind, kann die dritte Bahn 46 auf derselben Anlage mit Kleberpunkten versehen werden wie die erste Bahn. Die erste und/oder die dritte Bahn 10, 46 können auf Vorrat mit dem Kleber versehen und bis zum Gebrauch gelagert werden, wobei die Kleberseite durch eine von Etiketten her bekannte Bahn aus Trennpapier geschützt wird; die Trennpapierbahn wird vor dem Verkleben abgezogen und kann wiederverwendet werden. Sie dient als eine Möglichkeit einer Abdekkung der Kleberpunkte. Die dritte Bahn 46 hat beispielsweise dieselbe Dicke wie die erste Bahn 10, z.B. 0,1 mm.

Die Bemusterung des Klebers auf der dritten Bahn 46 kann auch anders gewählt werden. Ferner kann die dritte Bahn 46, die nur eine Schutzfunktion ausübt, auch weggelassen werden. Die dritte Bahn 46 kann alternativ auch zur Aufnahme des Chips 42 dienen, wozu diese dann mit einer Chipöffnung versehen ist. Ferner liegen die Verbindungsdrähte 44 vorzugsweise in der dritten Bahn 46.

Der so mit Kleber geheftete Verbund kann nun durch Schweißpunkte gesichert werden. Er kann sofort zu fertigen Karten weiterverarbeitet werden, wozu auf die außenliegenden Seiten der ersten und der dritten Bahn 10, 46 oder der ersten und zweiten Bahn 10, 20, wenn die dritte Bahn 46 fehlt, Deckbahnen 50, 52 registerhaltig zugeführt werden. Die Deckbahnen 50, 52 weisen dazu entsprechende Markierungen auf, die denen der anderen Bahnen entsprechen. Der so gebildete Schichtaufbau wird durch eine Laminiereinrichtung geführt, wie beispielsweise in EP 134 820 beschrieben, um die einzelenen Bahnen untereinander zu einer Endbahn zu verbinden. Danach werden Kunststoffkarten, in die jeweils ein Chip 42 mit Flachspule 40 eingebettet ist, dem Umriß 13 folgend aus der Endbahn ausgestanzt. Einen Teilschnitt im Bereich von Spule und Chip einer so fertiggestellten Karte zeigt Fig. 8.

Anstelle einer beidseitigen Anordnung von Deckbahnen 50, 52 kann eine solche Deckbahn auch nur einseitig vorgesehen sein.

Die verschiedenen Bahnen 10, 20, 46, 50, 52 bestehen jeweils aus einem Kunststoffmaterial. Bevorzugte Kunststoffmaterialien sind PVC, Polycarbonat und Polyethylen.

Es ist aber auch möglich, den Verbund aus erster, zweiter und gegebenenfalls dritter Bahn 10, 20, 46 auf Vorrat zu fertigen und auf Bobinen aufzuwickeln. Wenn deren Durchmesser nicht kleiner ist als 300 mm oder sogar 250 mm, zeigt sich erstaunlicherweise, daß weder eine Beschädigung der Spule noch ihrer Verbindung zum Chip feststellbar ist, die Ausschußquote also gering bleibt. Der Verbund kann also an einem Ort gefertigt werden und zu einer Laminieranlage gebracht werden, auf der dann der Verbund wie eine normale, also keine Spule mit Chip enthaltende Bahn behandelt wird.

In Abwandlung des vorstehend beschriebenen Verfahrens können die mittleren Kleberpunkte 16 nicht aufgetragen werden, also entfallen. Dies führt dazu, daß die Ausstanzung, hier der Ring 30, als abgetrenntes Bahnteilstück nicht an der ersten Bahn 10 anhaftet. Da diese Ausstanzung sowieso entnommen wird, kann jedoch diese Zwischenfixierung entfallen. Für ein Anheften der Flachspule 40 kann vor einem Aufsetzen derselben auf die erste Bahn 10 in dem durch die Ausstanzung hergestellten Durchbruch Kleber eingebracht werden. Alternativ kann die Flachspule 40 durch das Aufbringen einer Abdeckbahn auf der zweiten Bahn 20 ortsfest gehalter werden. Die inneren und äußeren Kleberpunkte 14, 18 in einem Nahbereich der von dem Durchbruch aufzunehmenden Flachspule 40 stellen sicher, daß der Durchbruch maßhaltig eingetragen werden kann.

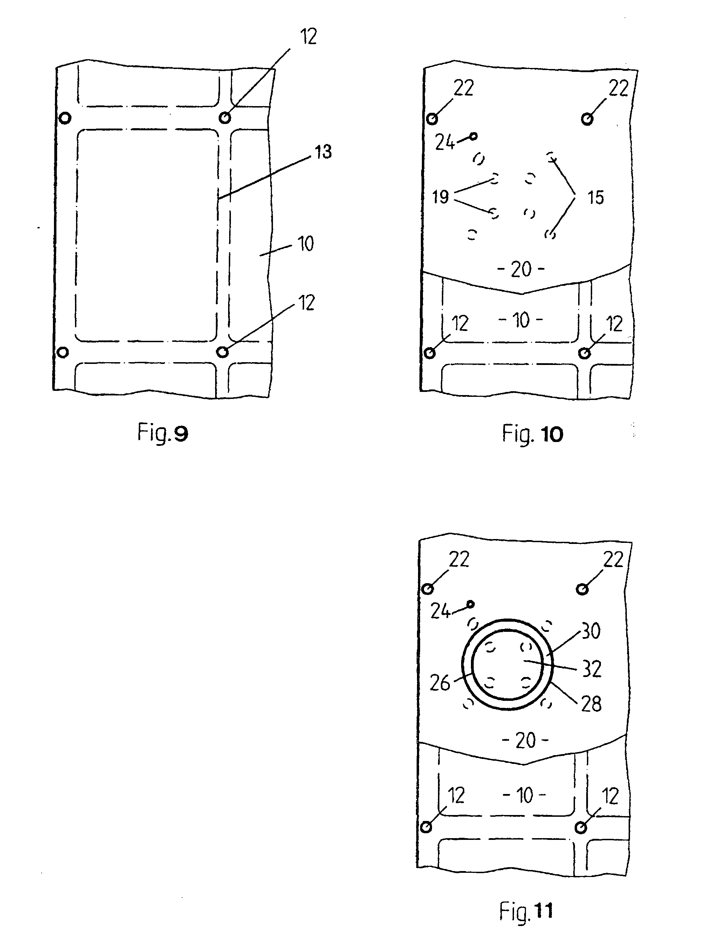

Die Fig. 9 bis 11 verdeutlichen Verfahrensabschnitte eines Verfahrens zur Herstellung von Kunststoffkarten mit einem Chip und einer mit dem Chip verbundenen Flachspule gemäß einem zweiten Ausführungsbeispiel. Die in den Fig. 6 bis 8 dargestellten Ergebnisse von weiteren Verfahrensschritten gelten entsprechend für das zweite Ausführungsbeispiel, so daß insoweit auf diese Fig. 6 bis 8 in Zusammenhang mit den Fig. 9 bis 11 bezug genommen wird.

Das zweite Ausführungsbeispiel unterscheidet sich von dem ersten Ausführungsbeispiel dadurch, daß die äußeren unbd inneren Kleberpunkte 14, 18 ersetzt sind durch äußere und innere Schweißpunkte 15, 19. Es entfallen mittlere Fixierungspunkte. Ferner entfällt ein äußerer Schweißpunkt 15 dort, wo eine Öffnung 24 für einen Chip vorgesehen ist. Ein alternativer äußerer Schweißpunkt kann gesetzt werden oder die Öffnung 24 für den Chip wird räumlich versetzt (Fig. 10).

Gemäß dem zweiten Ausführungsbeispiel wird dann ausgehend von einer ersten Bahn 10 gemäß Fig. 9, die der in Fig. 1 dargestellten und beschriebenen ersten Bahn 10 entspricht, und zwar unter Auslassung des in Fig. 2 dargestellten Verfahrensschritt, eine zweite Bahn 20 auf die erste Bahn 10 gemäß Fig. 9 gelegt. Danach werden äußere Fixierungspunkte 15 und innere Fixierungspunkte 19 gesetzt, die hier von Schweißpunkten gebildet werden, wodurch die erste Bahn 10 und die zweite Bahn 20 durch örtlich begrenztes Anschmelzen der beiden Bahnen 10, 20 untereinander verbunden werden. Die Fixierungspunkte in Form von Schweißpunkten 15, 19 werden wie die Kleberpunkte 14, 18 derart verteilt, daß sie beidseitig benachbart eines einer Form der Flachspule 40 (Fig. 6) entsprechenden Bahnteilstücks angeordnet werden.

In einem nächsten Arbeitsgang, dessen Ergebnis in Fig. 11 wiedergegeben ist, werden mittels eines Stanzwerkzeugs, vorzugsweise mittels eines Bandstahlschnitts, zwei konzentrische Schnitte 26, 28 nur in die zweite Bahn eingebracht. Diese Stanzung dient der Ausbildung eines Durchbruchs in der zweiten Bahn 20 zur späteren Aufnahme der Flachspule 40. Die Stanzung für den Durchbruch liegt demnach zwischen den äußeren und den inneren Schweißpunkten 15, 19. Bezüglich der Stanzung gelten die Ausführungen zur Fig. 4 entsprechend.

Der von den Schnitten 26, 28 begrenzte Ring 30 wird nun aus der zweiten Bahn 20 entnommen. Hierfür kann man die aneinandergehefteten Bahnen 10 und 20 über eine Querstange 34 führen, wie in Fig. 5 gezeigt, wodurch die Bahnen 1, 2 eine Krümmung erfahren. Dadurch kann sich ein ausgestanzter Bereich, da er nicht von Fixierungspunkten gehalten ist, aus der zweiten Bahn 20 anheben und kann von einem Haken 38 erfaßt werden, von dem er dann durch nicht gezeigte Mittel abgenommen wird.

In eine so entstandene kreisringförmige Ausnehmung paßt die Spule 40, die manuell oder maschinell eingelegt wird und dann auf der ersten Bahn 10 sitzt. Ebenso kann der Chip 42 in eine für ihn bestimmte Öffnung 24 eingelegt und von einem darunter vorsehbaren Kleberpunkt gehalten werden. Verbindungsdrähte 44 zwischen Spule 40 und Chip 42 legen sich dabei einfach auf die Oberseite der zweiten Bahn 20. Die Spule 40 kann durch einen auf der ersten Bahn 10 vorsehbaren Kleberpunkt fixiert werden. Alternativ kann die Spule 40 von einer Abdeckbahn, wie sie beispielsweise als Bahn 46 und/oder 50 gemäß Fig. 7 und 8 vorgesehen ist, gehalten werden, die beim Entnehmen des Rings 30 eine Kleberwirkung behalten haben. Das Ergebnis dieses Arbeitsgangs ist in Fig. 6 dargestellt, wobei die Spule 40 durch eine Schraffur angedeutet ist.

Die Schweißpunkte 15, 19 können beispielsweise durch Ultraschallschweißen gesetzt werden.

Im übrigen gelten die Ausführungen zu dem ersten Ausführungsbeispiel entsprechend.

## Patentansprüche

1. Verfahren zum Herstellen von Kunststoffkarten mit einem Schichtaufbau, in die jeweils eine Flachspule (40) und ein mit ihr verbundener Chip (42) eingebettet werden, wozu diese Komponenten auf eine erste Bahn (10) gesetzt werden, auf die eine zweite Bahn (20) zur Aufnahme von Durchbrüchen für die Komponenten und mindestens eine Abdeckbahn (50, 52) aufgebracht und durch Laminieren untereinander verbunden werden zu einer Endbahn, aus der Kunststoffkarten ausgestanzt werden, **dadurch gekennzeichnet, daß** eine auf die erste Bahn (10) aufgelegte zweite Bahn (20) an einem wählbaren Bahnabschnitt derselben über Fixierungspunkte (14 ....19) gehalten wird, während ein die Flachspule (40) aufzunehmender Durchbruch (30) in die zweite Bahn eingetragen wird, wofür die Fixierungspunkte derart verteilt werden, daß sie beidseitig benachbart eines der Form der Flachspule entsprechenden Bahnteilstücks angeordnet werden, und danach die Flachspule (40) für ein Setzen auf die erste Bahn in den so gebildeten Durchbruch (30) eingelegt und der Chip (42) in eine mit einer Chipöffnung (24) versehenen Bahn eingelegt wird.

2. Verfahren nach Anspruch 1, **dadurch gekennzeichnet, daß** als Fixierungspunkte (14, 16, 18) Kleberpunkte verwendet werden.

3. Verfahren nach Anspruch 1 oder 2, **dadurch gekennzeichnet, daß** auf der ersten Bahn zunächst mittlere Kleberpunkt (16) aufgetragen werden, deren Verteilung der Form der Flachspule folgt und beidseitig benachbart dieser mittleren Kleberpunkte die Fixierungspunkte als äußere und innere Kleberpunkte (14, 18) aufgetragen werden.

4. Verfahren nach Anspruch 3, **dadurch gekennzeichnet, daß** die Flachspule auf der ersten Bahn durch die mittleren Kleberpunkte (16) fixiert wird.

5. Verfahren nach einem der Ansprüche 2 bis 4, **dadurch gekennzeichnet, daß** der Kleber im Siebdruckverfahren aufgebracht wird.

6. Verfahren nach einem der Ansprüche 2 bis 5, **dadurch gekennzeichnet, daß** die mit Kleberpunkten versehene Seite der ersten Bahn bis zur Verarbeitung mit einer Abdeckung versehen wird.

7. Verfahren nach Anspruch 1, **dadurch gekennzeichnet, daß** als Fixierungspunkte Schweißpunkte (15, 19) verwendet werden.

8. Verfahren nach Anspruch 7, **dadurch gekennzeichnet, daß** zur Anbringung der Schweißpunkte zunächst die zweite Bahn (20) auf die erste Bahn (10) gelegt wird und danach die Schweißpunkte (15, 19) durch lokales Anschmelzen der übereinanderliegenden Bahnen gelegt werden.

9. Verfahren nach Anspruch 8, **dadurch gekennzeichnet, daß** die Schweißpunkte durch Ultraschallschweißen gelegt werden.

10. Verfahren nach einem der Ansprüche 7 bis 9, **dadurch gekennzeichnet, daß** die Flachspule auf der ersten Bahn durch Aufbringen einer Abdeckbahn (46, 50) auf die zweite Bahn fixiert wird.

11. Verfahren nach einem der Ansprüche 1 bis 10, **dadurch gekennzeichnet, daß** die Fixierungspunkte (14, 15, 18, 19) derart beabstandet zueinahder gelegt werden, daß jeweils drei bis sechs derartige Fixierungspunkte umfangsseitig verteilt beidseitig benachbart der Form einer Flachspule liegen.

12. Verfahren nach einem der Ansprüche 1 bis 11, **dadurch gekennzeichnet, daß** die mit der Chipöffnung (24) versehene Bahn von der zweiten Bahn gebildet wird.

13. Verfahren nach einem der Ansprüche 1 bis 12, **dadurch gekennzeichnet, daß** der Chip mittels Kleber unter der Chipöffnung fixiert wird.

14. Verfahren nach einem der Ansprüche 1 bis 13, **dadurch gekennzeichnet, daß** der Durchbruch für die Flachspule durch Ausstanzen eines der Form der Flachspule entsprechenden Bahnteilstücks (30) eingetragen wird.

15. Verfahren nach einem der Ansprüche 1 bis 14, **dadurch gekennzeichnet, daß** bei Verwendung einer Ringspule als Flachspule die beidseitig angeordneten Fixierungspunkte (14, 15, 18, 19) jeweils radialförmig hintereinander angeordnet sind.

16. Verfahren nach einem der Ansprüche 1 bis 15, **dadurch gekennzeichnet, daß** der Durchbruch (30) mittels eines Bandstahlschnittes ausgestanzt wird.

17. Verfahren nach einem der Ansprüche 14 bis 16, **dadurch gekennzeichnet, daß** ein aus erster und zweiter Bahn gebildetes Halbzeug nach dem Stanzen um eine zur Bahnerstreckung quer verlaufende Achse (34) gekrümmt und der dadurch teilweise freikommende Ring erfaßt und entnommen wird.

18. Verfahren nach einem der Ansprüche 1 bis 17, **dadurch gekennzeichnet, daß** bei einem Lochen der zweiten Bahn zur Herstellung eines Durchbruchs (30) für die Flachspule auch eine Aufnahmeöffnung (24) für den Chip eingebracht wird.

19. Verfahren nach einem der Ansprüche 1 bis 18, **dadurch gekennzeichnet, daß** die Bahnen in ihren Rändern mit gleichbeabstandeten Markierungen (12, 22) versehen werden, die für ein registerhaltiges Zusammenführen der einzelnen Bahnen verwendet werden.

20. Verfahren nach einem der Ansprüche 1 bis 19, **dadurch gekennzeichnet, daß** als mindestens eine Abdeckbann (50, 52) eine bedruckte Bahn verwendet wird.

## Claims

1. Method of producing cards of plastics material of laminated construction in each of which a flat coil (40) and a chip (42) connected thereto are embedded, to which end these components are placed on a first web (10), to which a second web (20) to receive perforations for the components and at least one covering web (50, 52) are applied and are connected together by lamination to give a final web from which cards of plastics material are punched out, **characterised in that** a second web (20) which is laid on the first web (10) is held at a selectable section of the latter by means of fixing points (14 ... 19) while a perforation (30) to receive the flat coil (40) is made in the second web, for which purpose the fixing points are so distributed that they are arranged adjacent a part of the web corresponding in shape to the flat coil (20) on both sides thereof, and after that the flat coil (40) is inserted in the perforation (30) so formed in order to be placed on the first web, and the chip (42) is inserted in a web provided with a chip opening (24).

2. Method according to claim 1, **characterised in that** spots of adhesive are used as fixing points (14, 16, 18).

3. Method according to claim 1 or 2, **characterised in that** central spots of adhesive (16) are applied first to the first web, the distribution of which spots of adhesive (16) follows the shape of the flat coil, and the fixing points are applied adjacent these central spots of adhesive, on both sides thereof, as outer and inner spots of adhesive (14, 18).

4. Method according to claim 3, **characterised in that** the flat coil is fixed on the first web by the central spots of adhesive (16).

5. Method according to one of claims 2 to 4, **characterised in that** the adhesive is applied by the silk-screen printing process.

6. Method according to one of claims 2 to 5, **characterised in that** the side of the first web which is provided with the spots of adhesive is provided with a cover up to the time of processing.

7. Method according to claim 1, **characterised in that** welded spots (15, 19) are provided as fixing points.

8. Method according to claim 7, **characterised in that**, to allow the welded spots to be applied, the second web (20) is first laid on the first web (10), and the welded spots (15, 19) are then placed by local initial melting of the webs lying on top of one another.

9. Method according to claim 8, **characterised in that** the welded spots are placed by ultrasonic welding.

10. Method according to one of claims 7 to 9, **characterised in that** the flat coil is fixed on the first web by applying a covering web (46, 50) to the second web.

11. Method according to one of claims 1 to 10, **characterised in that** the fixing points (14, 15, 18, 19) are placed at a spacing relative to one another such that three to six such fixing points at a time are situated, circumferentially distributed on both sides, adjacent the shape of a flat coil.

12. Method according to one of claims 1 to 11, **characterised in that** the web provided with the chip opening (24) is formed by the second web.

13. Method according to one of claims 1 to 12, **characterised in that** the chip is fixed under the chip opening by means of adhesive.

14. Method according to one of claims 1 to 13, **characterised in that** the perforation for the flat coil is made by cutting out a part (30) of the web matching the shape of the flat coil.

15. Method according to one of claims 1 to 14, **characterised in that** where an annular coil is used as the flat coil the fixing points (14, 15, 18, 19) arranged on both sides are in each case arranged one behind the other radially.

16. Method according to one of claims 1 to 15, **characterised in that** the perforation (30) is cut out by means of a cutting die of strip steel.

17. Method according to one of claims 14 to 16, **characterised in that** after the cutting a semi-finished product formed from the first and second webs is curved round a shaft (34) extending transversely to the extension of the webs and the ring which comes partly free in this way is taken hold of and removed.

18. Method according to one of claims 1 to 17, **characterised in that** when the second web is perforated to produce a perforation (30) for the flat coil, an opening (24) to receive the chip is also made.

19. Method according to one of claims 1 to 18, **characterised in that** the webs are provided at their edges with evenly spaced markings (12, 22) which are used to bring the individual webs together in register.

20. Method according to one of claims 1 to 19, **characterised in that** a printed web is used as at least one covering web (50, 52).

## Revendications

1. Procédé de fabrication de cartes en matière plastique avec une structure en couches dans laquelle sont intégrées une bobine plate **(40)** et une puce **(42)** reliée à elle, ces composants étant placés pour cela sur une première bande **(10)** sur laquelle une deuxième bande **(20)**, destinée à recevoir des passages pour les composants, et au moins une bande de recouvrement **(50, 52)** sont appliquées et reliées entre elles par laminage pour former une bande finale depuis laquelle les cartes en matière plastique sont estampées, **caractérisé en ce qu'**une deuxième bande **(20),** posée sur la première bande **(10),** est tenue sur une section de bande au choix de celle-ci par l'intermédiaire de points de fixation **(14,**... **19),** tandis qu'une traversée **(30)** recevant la bobine plate **(40)** est ménagée dans la deuxième bande, les points de fixation étant répartis de telle manière qu'ils sont placés de chaque côté au voisinage d'une partie de bande correspondant à la forme de la bobine plate, et la bobine plate **(40)** est ensuite posée dans la traversée **(30)** ainsi formée en vue d'une pose sur la première bande et la puce **(42)** est posée dans une bande munie d'une ouverture de puce **(24)**.

2. Procédé selon la revendication 1, **caractérisée en ce que** l'on utilise des points de colle comme points de fixation **(14, 16, 18)**.

3. Procédé selon la revendication 1 ou 2, **caractérisé en ce que** des points de colle médians **(16)** sont d'abord appliqués sur la première bande, dont la répartition suit la forme de la bobine plate et, de chaque côté au voisinage de ces points de colle médians, les points de fixation sont appliqués sous la forme de points de colle extérieurs et intérieurs **(14, 18)**.

4. Procédé selon la revendication 3, **caractérisé en ce que** la bobine plate est fixée sur la première bande par les points de colle médians **(16)**.

5. Procédé selon l'une des revendications 2 à 4, **caractérisé en ce que** la colle est appliquée par sérigraphie.

6. Procédé selon l'une des revendications 2 à 5, **caractérisé en ce que** la face de la première bande munie des points de colle est munie d'un recouvrement jusqu'à son traitement.

7. Procédé selon la revendication 1, **caractérisé en ce que** des points de soudure **(15, 19)** sont employés comme points de fixation.

8. Procédé selon la revendication 7, **caractérisé en ce que**, pour appliquer les points de soudure, la deuxième bande **(20)** est d'abord posée sur la première bande **(10)**, puis les points de soudure **(15, 19)** sont réalisés par fusion locale des bandes superposées.

9. Procédé selon la revendication 8, **caractérisé en ce que** les points de soudure sont réalisés par soudure aux ultrasons.

10. Procédé selon l'une des revendications 7 à 9, **caractérisé en ce que** la bobine plate est fixée sur la première bande par application d'une bande de recouvrement **(46, 50)** sur la deuxième bande.

11. Procédé selon l'une des revendications 1 à 10, **caractérisé en ce que** les points de fixation **(14, 15, 18, 19)** sont réalisés avec un écartement mutuel tel qu'à chaque fois, trois à six points de fixation sont répartis sur la circonférence de chaque côté, à proximité de l'emplacement d'une bobine plate.

12. Procédé selon l'une des revendications 1 à 11, **caractérisé en ce que** la bande munie de l'ouverture de puce **(24)** est formée de la deuxième bande.

13. Procédé selon l'une des revendications 1 à 12, **caractérisé en ce que** la puce est fixée sous l'ouverture de puce au moyen de colle.

14. Procédé selon l'une des revendications 1 à 13, **caractérisé en ce que** la traversée pour la bobine plate est ménagée par estampage d'une partie de bande **(30)** correspondant à la forme de la bobine plate.

15. Procédé selon l'une des revendications 1 à 14, **caractérisé en ce que**, lorsqu'on utilise une bobine annulaire comme bobine plate, les points de fixation **(14, 15, 18, 19)** disposés des deux côtés sont placés les uns derrière les autres dans la direction radiale.

16. Procédé selon l'une des revendications 1 à 15, **caractérisé en ce que** la traversée **(30)** est estampée au moyen d'une découpe de feuillard.

17. Procédé selon l'une des revendications 14 à 16, **caractérisé en ce qu'**un produit intermédiaire formé de la première et de la deuxième bande est courbé après l'estampage autour d'un axe **(34)** transversal à l'extension des bandes et l'anneau ainsi partiellement dégagé est saisi et retiré.

18. Procédé selon l'une des revendications 1 à 17, **caractérisé en ce que**, lors d'une perforation de la deuxième bande pour fabriquer une traversée **(30)** pour la bobine plate, une ouverture de réception **(24)** est également ménagée pour la puce.

19. Procédé selon l'une des revendications 1 à 18, **caractérisé en ce que** les bandes sont munies, sur leurs bords, de marquages **(12, 22)** équidistants, qui sont employés pour assembler les différentes bandes en coïncidence.

20. Procédé selon l'une des revendications 1 à 19, **caractérisé en ce que** l'on utilise une bande imprimée pour la bande de recouvrement **(50, 52)** au nombre d'au moins une.
